# EUROPÄISCHE PATENTSCHRIFT

(11) **EP 1 446 900 B1**
(45) Veröffentlichungstag und Bekanntmachung des Hinweises auf die Patenterteilung: **05.10.2005**
(21) Anmeldenummer: 02791583.4
(22) Anmeldetag: 19.11.2002
(51) Int. Cl.: H04B 10/10, G07B 15/00

(54) **INFRAROT (IR) ÜBERTRAGUNGSEINRICHTUNG**
INFRARED (IR) TRANSMISSION DEVICE
SYSTEME DE TRANSMISSION INFRAROUGE (IR)

(30) Priorität: 20.11.2001 AT 18262001
(43) Veröffentlichungstag der Anmeldung: 18.08.2004
(73) Patentinhaber: Efkon AG, 8045 Graz (AT)
(72) Erfinder: SCHALK, Andreas, A-8045 Graz (AT); PAMMER, Raimund, A-8503 St. Josef (AT); RIEDER, Helmut, A-8020 Graz (AT)
(74) Vertreter: Sonn & Partner Patentanwälte
(86) Internationale Anmeldenummer: PCT/AT2002/000322
(87) Internationale Veröffentlichungsnummer: WO 2003/044993

(56) Entgegenhaltungen:
- EP-A- 0 413 948
- EP-A- 0 840 502
- US-A- 5 187 360
- US-A- 6 037 594

## Beschreibung

Die Erfindung betrifft eine Infrarot (IR-)-Übertragungseinrichtung mit in einem Gehäuse angeordneten IR-Sende- und -Empfangselementen gemäß dem einleitenden Teil von Anspruch 1. Eine solche Infrarot-Übertragungseinrichtung ist aus EP 413 948 A bekannt.

Infrarot-Übertragungseinrichtungen sind ganz allgemein, beispielsweise bei Fernsteuerungen für Konsumelektronikgeräte, wie Fernsehgeräte, Videorecorder und Stereoanlagen, aber auch für elektronische Mautsysteme bekannt. Die Kommunikation mit Hilfe von Infrarot-Signalen ist dabei jedoch in der Regel nur über kurze Distanzen möglich, etwa im Bereich von DSRC-Kommunikation (Dedicated Short Range Communication-Nahbereichskommunikation) mit begrenzten Reichweiten von üblicherweise unter 10 m. In der nicht-vorveröffentlichten Anmeldung AT 77/2001 der Anmelderin ist eine selektive drahtlose Kommunikationseinrichtung vorgeschlagen worden, mit der Reichweiten bis zu 100 oder 200 m möglich sind, wobei hier Abfragen von sog. OBU-(On Board Unit)Einheiten im Zusammenhang mit der Überprüfung der ordnungsgemäßen Entrichtung von Mautgebühren, Parkplatzgebühren oder dergl. betroffen sind.

Im Bereich der Telekommunikation ist die Anbindung einzelner Teilnehmer an das Telekommunikationsnetz eines Netzbetreibers eines der Hauptprobleme. Diese Anbindung der Teilnehmer an das Netz wird üblicherweise als "Teilnehmerleitung" bzw. "Last Mile" bezeichnet. Diese Teilnehmerleitung ist weniger für etablierte Netzbetreiber eine Schwierigkeit, da diese bereits aus der Vergangenheit über ausreichende Teil-nehmer-Kabelnetze verfügen, jedoch sind sie für neue Netzbetreiber ein Problem, da diese entweder vorhandene Leitungen von etablierten Netzbetreibern mieten müssen oder aber selbst Leitungen legen müssen, was arbeits- und kostenaufwendig ist; es wird daher in diesem Zusammenhang der Einsatz alternativer Technologien gewünscht, wie etwa auf Basis von DECT-Systemen oder GSM-Systemen, wobei jedoch der Nachteil kleiner Bandbreiten und teurer Frequenzlizenzen gegeben ist; eine andere, ebenfalls sehr teure und mit teuren Frequenzlizenzen verbundene Alternative sind digitale Richtfunkstrecken, gegebenenfalls auch optische Laserverbindungen.

Es ist nun Ziel der Erfindung, eine Infrarot-Übertragungseinrichtung der eingangs angegebenen Art vorzusehen, die eine Signalübertragung über größere Distanzen, je nach Ausführung über mehrere hundert Meter bis über 1000 m, ermöglicht und so zum Einsatz in optischen "Last Mile"-Lösungen geeignet ist, die kostengünstig und deshalb auch breit anwendbar ist und die ausreichend große Übertragungsbandbreiten bietet sowie eine Datenübertragung mit aktiver Fehlerkorrektur ermöglicht.

Zur Lösung dieser Aufgabe sieht die Erfindung eine Infrarot-Übertragungseinrichtung, wie in Anspruch 1 definiert, vor. Dabei ist ein gemeinsames, mehrsegmentiges Linsenelement den Infrarot-Elementen vorgeordnet, bei dem jedem Infrarot-Element ein eigenes Linsensegment des gemeinsamen Linsenelements zugeordnet ist.

Die Erfindung sieht eine breit anwendbare, äußerst kostengünstige Infrarot-Lösung insbesondere für die "Last Mile"- Signalübertragung vor, wobei durch das angegebene Linsenelement in Verbindung mit dem dahinter insbesondere in einer größeren Anzahl vorgesehenen IR-Sende- und Empfangselementen auch eine Übertragung über größere Distanzen, bis zu 1000 m und mehr, möglich ist, so dass die Eignung für Teilnehmer-Anbindungen gegeben ist. Durch die Infrarot-Übertragungstechnik ist dabei eine Übertragungsrate von 10 bis über 100 Mbit/s möglich, also etwa die mehr als 10fache Übertragungsrate im Vergleich zu ADSL-Systemen bzw. die mehr als 100fache Kapazität im Vergleich zu ISDN-Systemen. Dabei ist weiters eine Datenanbindung an die von Netzbetreibern üblicherweise verwendeten Netze problemlos möglich, wie z.B. ATM, SONET oder aber auch LAN-Netze, z.B. Ethernet. Die Infrarot-Übertragungstechnik erlaubt auch aktive Fehlerkorrektur- und Redundanz-Verfahren, wie sie zur Versorgung heikler Teilnehmerstellen unbedingt notwendig sind; ferner ist eine Fern-Administration der Übertragungseinrichtung möglich (über ein sog. "Q-Interface"). Die Übertragungseinrichtung mit dem gemeinsamen mehrsegmentigen Linsenelement kann einfach und kostengünstig hergestellt, montiert und ausgerichtet werden; insbesondere kann auch das mehrsegmentige Linsenelement aus Kunststoff in einer an sich; beispielsweise aus der Herstellung von CD-Platten bekannten, Technologie erzeugt werden, wie etwa als Spritzgussteil, Pressteil oder Prägeteil, wobei überdies auch im Linsenelement bereits zumindest bereichsweise, durch Einbau von Farbstoffen, eine optische Filterwirkung vorgesehen werden kann.

Im Vergleich zu herkömmlichen HF-Technologien für die "Last Mile"-Anwendung ergibt sich weiters als Vorteil, dass keine Genehmigungspflicht für Trägerfrequenzen notwendig ist, dass höhere Bandbreiten und effizientere Sendeleistungen erreichbar sind, ferner dass die Kommunikationszonen gut auf die jeweilige Applikation abstimmbar sind und dass minimale Abstände zur nächsten Kommunikationseinrichtung denkbar sind. Ferner werden Intermodulationserscheinungen zu Folge benachbarter Trägerfrequenzen vermieden, und als besonderer Vorteil ergibt sich auch die Vermeidung von "Elektrosmog". Infrarot ist an sich im Sonnenlicht enthalten und stellt keine Gefahr für Mensch und Tier dar. Ferner handelt es sich bei der an sich bereits bekannten Infrarot-Transceivertechnologie um eine kostengünstige Technologie. Hierbei ist es insbesondere günstig, wenn inkohärente InfrarotStrahlung als leistungsfähiges, bidirektionales Datenübertragungsmedium im Freien verwendet wird. Auf diese Weise wird auch im Vergleich zu etwaigen Lösungen mit Infrarotlaser eine wesentlich kostengünstigere Realisierung mit geringerem Aufwand auch bei der Montage bzw. Ausrichtung erzielt. Ferner wird durch das inkohärente Übertragungsmedium eine hohe Zuverlässigkeit bei der Signalübertragung gewährleistet.

Das mehrsegmentige Linsenelement kann z.B. aus Acrylglas oder Polycarbonat bestehen, wobei sich für die Produktion eine der vorerwähnten, an sich bekannten Fertigungstechniken anbietet. Das Linsenelement kann in einem Stück gefertigt werden, es ist jedoch auch für viele Anwendungen günstig, wenn das mehrsegmentige Linsenelement mit einer transparenten Tragplatte, z.B. aus Glas, zusammengebaut ist. Weiters ist es von Vorteil, wenn im Hinblick auf eine einfache Ausbildung das mehrsegmentige Linsenelement, gegebenenfalls zusammen mit der Tragplatte, eine Abdeckung des Gehäuses bildet.

Die Linsensegmente können refraktive optische Elemente sein, bei denen eine Strahlablenkung somit durch Brechung an den Grenzflächen erfolgt, wobei sich hiefür insbesondere die Spritzgusstechnik als Herstellungsmöglichkeit anbietet. Andererseits ist eine Ausführung mit diffraktiven Elementen in Master-Replika-Technik, Spritzgusstechnik oder Prägetechnik von Vorteil, wobei bei diesen diffraktiven Linsensegmenten, mit Fresnellinsen, die Strahlablenkung durch Beugung erfolgt. Dabei sind definierte Gitterstrukturen für die gewünschten Abbildungseigenschaften vorgesehen, und es können Gitter auf der planen Seite der Linsensegmente die sphärische Aberration kompensieren; diffraktive Strahlmultiplexer können einen einfallenden Infrarotstrahl in einen Satz von gleichen Strahlen auftrennen oder aber beliebige Intensitätsverteilungen aus einem Gaußprofil erzeugen.

Wie erwähnt können durch Einbau von Laser-Dye-Farbstoffen oder dergl. gleichzeitig optische Filtereffekte im Linsenelement vorgesehen werden, um so eine Tageslichtsperre vorzusehen. Als Sende- bzw. Empfangselement können an sich handelsübliche Infrarot LED-Sendedioden mit integraler Optik (Linse) und seriengerechter Montagemöglichkeit bzw. an sich herkömmliche PIN-Dioden mit integralem Empfangsfilter als Empfängerelemente eingesetzt werden.

Um eine hohe Sendeleistung zu erzielen, hat es sich auch als vorteilhaft erwiesen, wenn das mehrsegmentige Linsenelement mit einem mittigen Empfangselement-Linsensegment und einer Anzahl von außerhalb hievon gelegenen Sendeelement-Linsensegmenten ausgebildet ist. Für eine günstige Platzausnutzung ist es dabei weiters zweckmäßig, wenn die Sendeelement-Linsensegmente entsprechend einer Kreislinie um das mittige Empfangselement-Linsensegment angeordnet sind. Weiters ist es für eine adäquate Empfindlichkeit beim Empfang von Infrarotstrahlung von Vorteil, wenn das Empfangselement-Linsensegment in Draufsicht gesehen größer als jedes einzelne Sendeelement-Linsensegment ist.

Die IR-Sende- und -Empfangselemente können im Hinblick auf eine einfache Herstellung bzw. Montage auf einer einzigen, gemeinsamen Leiterplatte integriert sein, die eine Art Zwischenboden im Gehäuse bilden kann.

Es sei noch erwähnt, dass aus der US 5 187 360 A an sich bereits eine Mehrbereichslinse mit einer Anzahl von Linsenbereichen bekannt ist, jedoch ist diese Mehrbereichslinse mit einer derartigen dreidimensionalen Anordnung der Linsensegmente ausgebildet, dass die einzelnen Linsenbereiche ihre Strahlung aus einer bestimmten Zone empfangen, ohne aus benachbarten Zonen Strahlung empfangen zu können, wobei die einzelnen Linsenbereiche die aus verschiedenen Zonen herrührende Strahlung auf einen gemeinsamen Fokuspunkt fokussieren sollen. Diese Mehrbereichslinse ist für einen Einbruchs-Detektor vorgesehen. Sie wäre aber ersichtlich für die vorstehend angesprochene Anwendung im Telekommunikationsbereich ungeeignet, wobei kein gerichtetes Senden bzw. Empfangen möglich wäre, vielmehr zahlreiche Störsignale die Nutzsignalübertragung überlagern würden.

Aus US 6 037 594 A und EP 840 502 A sind ebenfalls bereits Linsenelemente mit mehreren Linsensegmenten bekannt, jedoch ebenfalls nur für bloße Empfangseinrichtungen, nämlich einen Bewegungsmelder bzw. eine Kamera.

Die Erfindung wird nachstehend an Hand von in der Zeichnung veranschaulichten bevorzugten Ausführungsbeispielen, auf die sie jedoch nicht beschränkt sein soll, noch weiter erläutert. Es zeigen im Einzelnen:
Fig.1 ein schematisches Blockschaltbild einer IR-Übertragungseinrichtung zur Anbindung eines Teilnehmers an ein Telekommunikationsnetz;
Fig.2 eine Draufsicht auf eine Ausführungsform einer IR-Übertragungseinrichtung zur Veranschaulichung des gemeinsamen, mehrsegmentigen Linsenelements;
Fig.3 einen Querschnitt durch diese Übertragungseinrichtung gemäß der Linie III-III in Fig.2;
Fig.4 in einer Draufsicht ähnlich Fig.2 eine andere Ausführungsform der erfindungsgemäßen IR-Übertragungseinrichtung;
die Figuren 5 und 6 in schematischen Schnittdarstellungen zwei verschiedene Ausführungsformen für das gemeinsame mehrsegmentige Linsenelement, und zwar zum Einen als einstückiger Teil (Fig.5) und zum Anderen in einer zweiteiligen Ausführung mit einer Tragplatte aus Glas und einem darauf angebrachten eigentlichen Linsenelement; und
Fig.7 ein Beispiel für eine Sendedioden-Treiberschaltung.

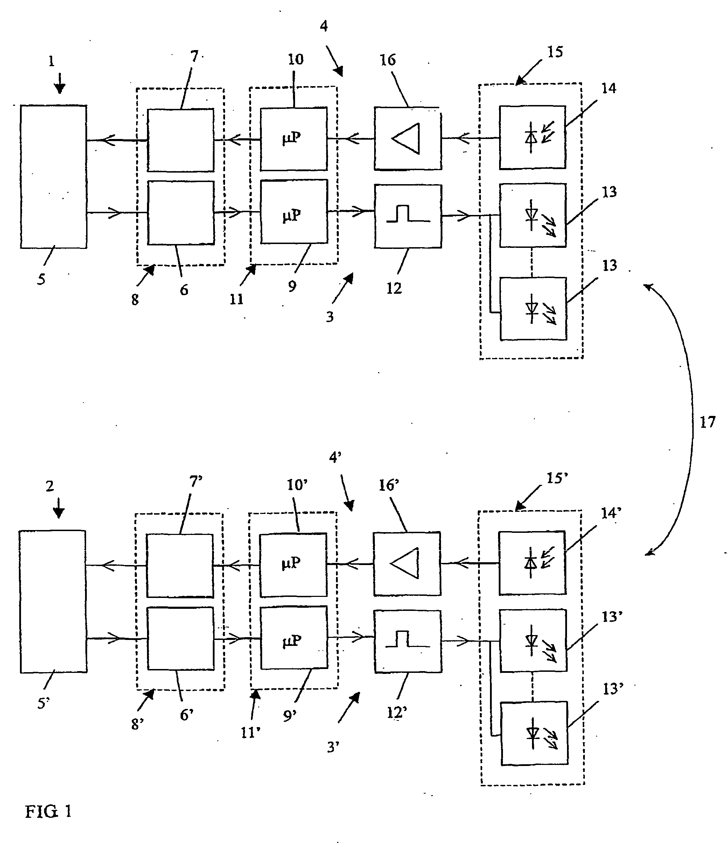

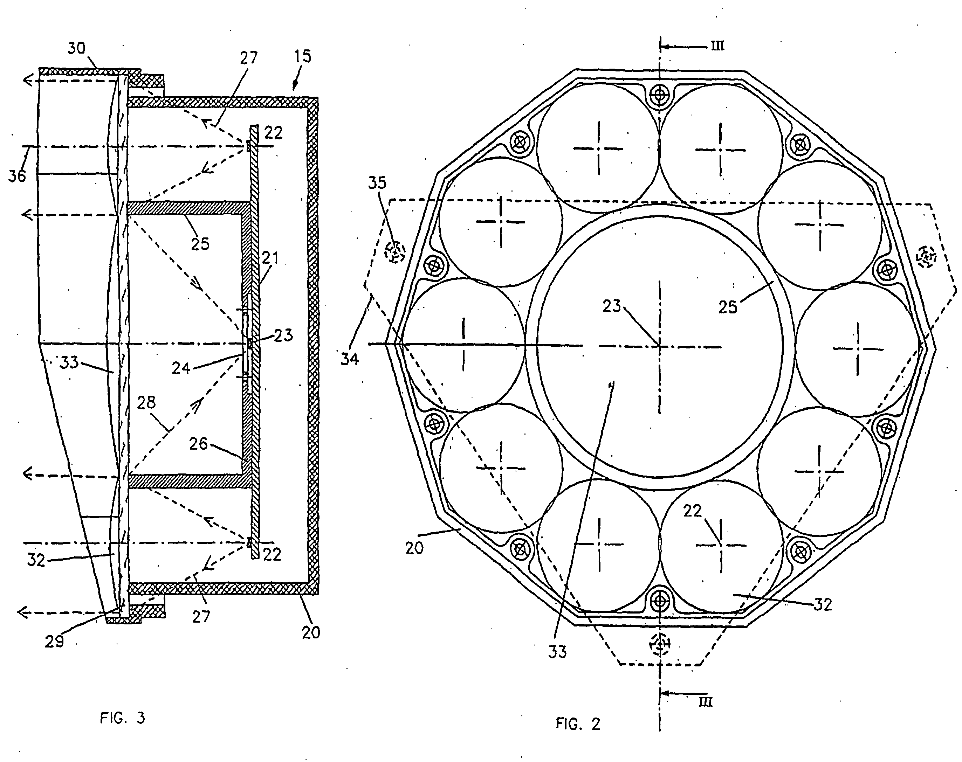

In Fig.1 ist schematisch in einem Blockschaltbild eine IR-Übertragungseinrichtung zur Anbindung eines Teilnehmers 1 an ein Netz 2 veranschaulicht. Die Übertragungseinrichtung enthält dabei, auf der Seite des Teilnehmers 1, einen Sendeteil 3 und einen Empfangsteil 4, wobei ein herkömmliches Telekommunikationsgerät, z.B. ein Telefonapparat usw., in Fig.1 mit 5 bezeichnet, über eine Sende-Schnittstelle 6 bzw. Empfangs-Schnittstelle 7 einer Schnittstelleneinheit 8 an einen Sende-Mikroprozessor 9 bzw. Empfangs-Mikroprozessor 10 einer Mikroprozessoreinheit 11 angeschlossen ist. Dem Sendeteil 3 folgt sodann ein Impulsformer 12, der IR-Sendeelemente 13 (in Fig.1 sind der Einfachheit halber nur zwei Sendeelemente 13 gezeigt) ansteuert. Diese IR-Sendeelemente 13 sind mit zumindest einem IR-Empfangselement 14 in einer gemeinsamen Baueinheit 15 zusammengefasst, wie sich nachstehend noch näher aus der Beschreibung der Fig.2 und 3 ergibt, und an das IR-Empfangselement 14 ist als elektronische Komponente ein Verstärker 16 angeschaltet, dessen Ausgang wiederum mit dem Empfangs-Mikroprozessor 10 verbunden ist.

Entsprechende Komponenten sind auf der Seite des Netzes 2 vorgesehen, wobei sich eine Wiederholung der Beschreibung erübrigen kann; die entsprechenden Elemente auf der Netz-Seite sind in Fig.1 mit den selben Bezugszahlen wie auf der Teilnehmerseite, jedoch mit einem Apostroph versehen, bezeichnet. Dabei schließt das eigentliche Netz bei 5' an. Die Kommunikation zwischen den beiden Einrichtungen wird mittels Infrarotstrahlung 17 (s. den Doppelpfeil in Fig.1) bewerkstelligt.

In den Figuren 2 und 3 ist eine Ausführungsform der Sende- und Empfangs-Baueinheit 15 veranschaulicht, wobei beispielsweise ein in Draufsicht zehneckiges, allgemein dosenförmiges Gehäuse 20 vorgesehen ist, in dessen Innerem eine gemeinsame Leiterplatte 21 mit z.B. 10 IR-Sendedioden 22 und mit einer mittigen IR-Empfangsdiode 23 angebracht ist. Die Empfangsdiode 23 liegt im Bereich einer Öffnung 24 einer inneren zylindrischen Abschirmung 25, wobei die Öffnung 24 im Boden 26 dieser Abschirmung 25 angebracht ist. Dadurch wird der Empfangsbereich der Baueinheit 15 vom Sendebereich getrennt, wobei der Sendebereich durch einen allgemein ringförmigen Raum rund um die zylindrische Abschirmung 25 herum gebildet ist. In Fig.3 ist dabei der Abstrahlwinkel der Sendedioden 22 schematisch mit strichlierten Linien bei 27 und der Empfangs- oder Eingangsbereich des Empfangselements 23 bei 28 angedeutet.

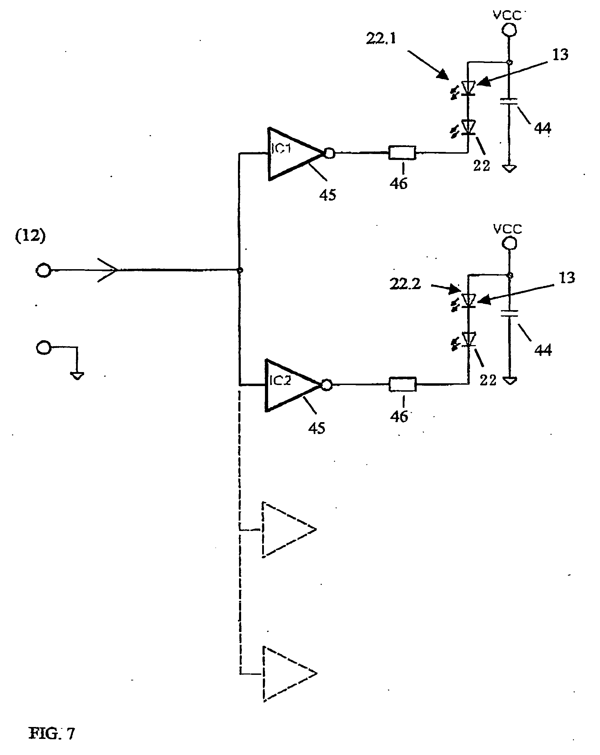

Als Gehäuseabdeckung für das Gehäuse 20 dient ein gemeinsames, mehrsegmentiges, im Wesentlichen plattenförmiges Linsenelement 29, das innerhalb einer Abschirmblende 30 zur Abschirmung von unerwünschter Umgebungsstrahlung angeordnet ist und mit einzelnen Linsensegmenten 32, 33 für die Empfangs- und Sendeelementeversehen ist. Im Einzelnen sind demgemäß den IR-Sendedioden 22 vorgeordnete, in Draufsicht (s. Fig.2) im Wesentlichen kreisförmige Sende-Linsensegmente 32 und ein mittleres Empfangs-Linsensegment 33 im Linsenelement 29 integriert. Die Linsenelemente 32, 33 können dabei, was in Fig.3 schematisch angedeutet ist, durch außen konvexe Bereiche des Linsenelements 29 gebildet sein, vorzugsweise in Kombination mit Gitterstrukturen bzw. Fresnellinsen-Strukturen, wie sich aus den nachfolgend noch näher zu erläuternden Figuren 5 und 6 ergibt.

Aus Fig.3 ist weiters ersichtlich, dass die Blende 30 vorzugsweise einteilig mit dem Gehäuse 20 geformt ist. Weiters zeigt Fig.2 mit strichlierten Linien 34 eine Montageplatte, die an der Unterseite oder Rückseite des Gehäuses 20 angebracht wird und zur Befestigung der optischen Baueinheit 15 an einem nicht näher gezeigten Träger, z.B. mit Hilfe von durch Schraubenlöcher 35 geschraubten Schrauben (nicht gezeigt), dient.

Aus Fig.3 ist weiters ersichtlich, dass der IR-Strahl 27, der von den Sendeelementen 22 abgestrahlt wird, zunächst einen Öffnungswinkel von 2 x 20°-25°, also insgesamt 40°-50°, aufweist, und zwar noch innerhalb des Gehäuses 20. Durch das jeweilige zugehörige, z.B. plankonvexe Linsensegment 32, wird dieser Strahl 27 sodann zu einem mehr oder weniger parallelen Strahl - an der Austrittsseite des jeweiligen Linsensegments 32 - kollimiert, wobei gegebenenfalls dieser Strahl entsprechend einem halben Öffnungswinkel von 1° oder einigen wenigen Grad divergiert. Durch diese "Parallelrichtung" der Strahlen 27 ergibt sich insgesamt eine starke Bündelung aller IR-Strahlen der Sendeelemente 22, wobei ein kreisringförmiges Gesamt-Strahlenbündel erhalten wird, das am Empfangs-Linsensegment 33 der Gegenstelle (also z.B. bei 14'), in einigen hundert Metern Abstand, auftrifft und von diesem Linsensegment 33 auf die dortige Öffnung 24 und das Empfangselement 23 fokussiert wird. Gegebenenfalls können die einzelnen IR-Strahlen 27 mit ihren Achsen 36 alle leicht zueinander konvergierend gebündelt werden, wozu die Linsensegmente 32 entsprechend gekrümmt verlaufend vorgesehen werden, um so möglichst viel IR-Licht auf dem Empfangs-Linsensegment der Gegenstelle auftreffen zu lassen.

Selbstverständlich sind außer der in Fig.2 gezeigten Anordnung der Linsensegmente 32, 33, mit gemäß einer Kreislinie um ein mittiges Empfangs-Linsenelement 33 angeordneten Sende-Linsensegmenten 32, auch andere Anordnungen der Linsensegmente 32, 33 am Linsenelement 29 möglich. So ist beispielsweise eine Anordnung der äußeren Sende-Linsensegmente gemäß einem Quadrat oder Rechteck um ein mittiges Empfangs-Linsenelement - das wiederum größer sein kann als die Sende-Linsenelemente - denkbar.

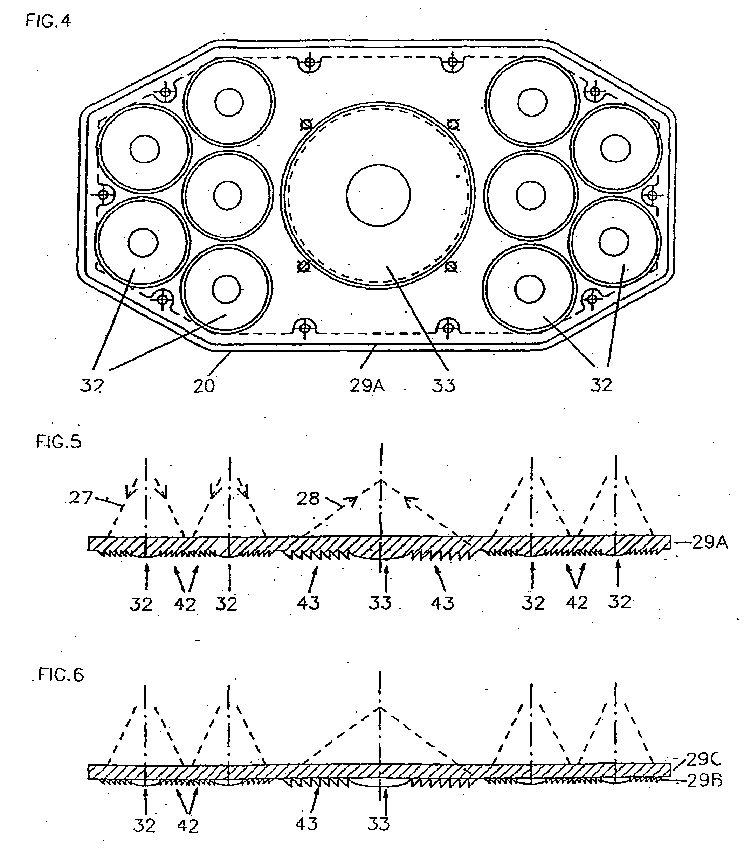

In Fig.4 ist eine Ausführungsform gezeigt, bei der in einem Linsenelement 29A zwei Gruppen von Sende-Linsensegmenten 32 - und dementsprechend zwei Gruppen von dahinter befindlichen, in Fig.4 nicht gezeigten IR-Sendedioden - beidseits eines wiederum größeren, mittigen Empfangs-Linsenelements 33 - wiederum mit dahinter befindlicher IR-Empfangsdiode - vorgesehen sind. Das Linsenelement 29A gemäß Fig.4 hat somit eine achteckige Form, mit einem großen rechteckigen Mittelteil und zwei seitlich angesetzten trapezförmigen Teilen, und es kann wiederum einstückig aus transparentem Kunststoffmaterial, wie z.B. Acrylglas oder Polycarbonat, gefertigt sein.

Fig.5 zeigt ein derartiges einteiliges Linsenelement 29A, wobei hier überdies schematisch angedeutet ist, dass jedes einzelne Linsensegment 32 bzw. 33 an der Außenseite oder Vorderseite mit einer Fresnellinsen-Struktur 42 bzw. 43 versehen ist, um die gewünschte Bündelung bzw. Fokussierung der Strahlen 27 bzw. 28 (Fig.3) zu erreichen. Diese Struktur des Linsenelements 29A (und auch des Linsenselements 29 gemäß Fig.2, 3 bzw. des Linsenelements 29B gemäß der nachfolgend beschriebenen Fig.6) kann durch Prägen, aber auch durch Spritzgießen erhalten werden, wobei die Fresnellinsen-Strukturen 42, 43 - die im Vergleich zu Informationsspuren auf CD-Aufzeichnungsträgern noch grobe Strukturen sind - problemlos mitgeformt werden können, wodurch eine einfache Herstellung, insbesondere in einer Massenfertigung, ermöglicht wird. Als Material für die Linsenelemente 29 (bzw. 29A und 29B) kann außer Acrylglas bzw. Polycarbonat auch Epoxidharz verwendet werden, und es kann ein Farbstoff zur Ausfilterung unerwünschter Frequenzen in das Material eingebaut werden.

Gemäß Fig.6 ist das eigentliche Filterelement 29B auf einer Tragplatte 29C angebracht, die aus Glas oder Acrylglas bestehen kann.

Selbstverständlich können auch in der Baueinheit 15 mehr als zehn, z.B. 12 oder 16 usw., IR-Sendedioden 22 vorgesehen werden; auch ist es möglich, anstatt einer IR-Empfangsdiode 23 ein Array von zusammengeschalteten, insbesondere parallelgeschalteten Empfangsdioden auf der Leiterplatte 21 (Fig.3) anzubringen.

In Fig.7 ist ein Beispiel für eine Treiberschaltung für die Sendeelemente 13, d.h. IR-Sendedioden 22, veranschaulicht, wobei ersichtlich ist, dass jeweils mehrere Sendedioden 22 in einer Gruppe 22.1, 22.2 in Serie geschaltet und mehrere Sendedioden-Gruppen 22.1, 22.2 parallel geschaltet sein können. Jede Gruppe 22.1, 22.2 ist an eine Speisespannung VCC gelegt, wobei ein Kondensator 44 zur Energie-Pufferung parallel geschaltet ist. Das vom Impulsformer 12 (Fig.1) kommende, zu sendende Signal wird in elektrischer Form jeder Sendedioden-Gruppe 22.1, 22.2 über ein Treibergatter 45 mit invertierendem Ausgang und einem Vorwiderstand 46 zugeführt.

Anstatt der gezeigten Treiberschaltung können selbstverständlich auch andere, an sich bekannte Ansteuerungen für die Sendedioden verwendet werden.

In entsprechender Weise kann bzw. können die Empfangsdioden 23 in an sich herkömmlicher Weise an eine Spannungsversorgung angeschlossen und über ein Bandpassfilter (nicht gezeigt) mit dem jeweiligen Verstärker (16 in Fig.1) verbunden sein.

## Patentansprüche

1. Infrarot (IR-)-Übertragungseinrichtung mit in einem Gehäuse angeordneten IR-Sende- und -Empfangselementen, **dadurch gekennzeichnet, dass** ein gemeinsames, mehrsegmentiges Linsenelement (29, 29A, 29B) den IR-Elementen (22, 32) vorgeordnet ist, wobei jedem IR-Element (22, 32) ein eigenes Linsensegment (32, 33) des Linsenelementes (29, 29A, 29B) zugeordnet ist.

2. Übertragungseinrichtung nach Anspruch 1, **dadurch gekennzeichnet, dass** als mehrsegmentiges Linsenelement (29, 29A, 29B) ein Spritzgussteil vorgesehen ist.

3. Übertragungseinrichtung nach Anspruch 1, **dadurch gekennzeichnet, dass** als mehrsegmentiges Linsenelement (29, 29A, 29B) ein Pressteil vorgesehen ist.

4. Übertragungseinrichtung nach Anspruch 1, **dadurch gekennzeichnet, dass** als mehrsegmentiges Linsenelement (29, 29A, 29B) ein Prägeteil vorgesehen ist.

5. Übertragungseinrichtung nach einem der Ansprüche 1 bis 4, **dadurch gekennzeichnet, dass** das mehrsegmentige Linsenelement (29, 29A, 29B) zumindest bereichsweise als optisches Filter ausgebildet ist.

6. Übertragungseinrichtung nach Anspruch 5, **dadurch gekennzeichnet, dass** das optische Filter durch Einbau eines Farbstoffes in das mehrsegmentige Linsenelement (29, 29A, 29B) gebildet ist.

7. Übertragungseinrichtung nach einem der Ansprüche 1 bis 6; **dadurch gekennzeichnet, dass** das mehrsegmentige Linsenelement (29, 29A, 29B) aus Acrylglas besteht.

8. Übertragungseinrichtung nach einem der Ansprüche 1 bis 6, **dadurch gekennzeichnet, dass** das mehrsegmentige Linsenelement (29, 29A, 29B) aus Polycarbonat besteht.

9. Übertragungseinrichtung nach einem der Ansprüche 1 bis 8, **dadurch gekennzeichnet, dass** das mehrsegmentige Linsenelement (29, 29A) einstückig ist.

10. Übertragungseinrichtung nach einem der Ansprüche 1 bis 9, **dadurch gekennzeichnet, dass** das mehrsegmentige Linsenelement (29B) mit einer transparenten Tragplatte (29C) zusammengebaut ist.

11. Übertragungseinrichtung nach Anspruch 10, **dadurch gekennzeichnet, dass** die transparente Tragplatte (29C) aus Glas besteht.

12. Übertragungseinrichtung nach einem der Ansprüche 1 bis 11, **dadurch gekennzeichnet, dass** das mehrsegmentige Linsenelement (29, 29A, 29B), gegebenenfalls zusammen mit der Tragplatte (29C), eine Abdeckung des Gehäuses (20) bildet.

13. Übertragungseinrichtung nach einem der Ansprüche 1 bis 12, **dadurch gekennzeichnet, dass** zumindest ein Linsensegment (32, 33) als refraktiver Bereich ausgebildet ist.

14. Übertragungseinrichtung nach einem der Ansprüche 1 bis 13, **dadurch gekennzeichnet, dass** zumindest ein Linsensegment (32, 33) als diffraktiver Bereich ausgebildet ist.

15. Übertragungseinrichtung nach einem der Ansprüche 1 bis 13, **dadurch gekennzeichnet, dass** zumindest ein Linsensegment (32, 33) als Fresnellinse ausgebildet ist.

16. Übertragungseinrichtung nach einem der Ansprüche 1 bis 15, **dadurch gekennzeichnet, dass** das mehrsegmentige Linsenelement (29, 29A, 29B) mit einem mittigen Empfangselement-Linsensegment (33) und einer Anzahl von außerhalb hievon gelegenen Sendeelement-Linsensegmenten (32) ausgebildet ist.

17. Übertragungseinrichtung nach Anspruch 16, **dadurch gekennzeichnet, dass** die Sendeelement-Linsensegmente (32) entsprechend einer Kreislinie um das mittige Empfangselement-Linsensegment (33) angeordnet sind.

18. Übertragungseinrichtung nach Anspruch 16 oder 17, **dadurch gekennzeichnet, dass** das Empfangselement-Linsensegment (33) in Draufsicht gesehen größer als jedes einzelne Sendeelement-Linsensegment (32) ist.

19. Übertragungseinrichtung nach einem der Ansprüche 1 bis 18, **dadurch gekennzeichnet, dass** die IR-Sende- und Empfangselemente (22, 23) für eine inkohärente IR-Strahlung ausgebildet sind.

20. Übertragungseinrichtung nach einem der Ansprüche 1 bis 19,
**dadurch gekennzeichnet, dass** die IR-Sende- und -Empfangselemente (22, 23) auf einer einzigen Leiterplatte (21) integriert sind.

21. Übertragungseinrichtung nach einem der Ansprüche 1 bis 20,
**dadurch gekennzeichnet, dass** die IR-Sendeelemente (22) durch IR-LED-Sendedioden mit integraler Optik gebildet sind.

22. Übertragungseinrichtung nach einem der Ansprüche 1 bis 21,
**dadurch gekennzeichnet, dass** die IR-Empfangfselemente (23) durch PIN- Dioden gebildet sind.

## Claims

1. An infrared (IR) transmission device comprising IR transmitter and receiver elements arranged in a housing, **characterised in that** a common, multi-segment lens element (29, 29A, 29B) is arranged ahead of the IR elements (22, 32), wherein each IR element (22, 32) has an own associated lens segment (32, 33) of the lens element (29, 29A, 29B).

2. A transmission device according to claim 1, **characterised in that** an injection-molded part is provided as said multi-segment lens element (29, 29A, 29B).

3. A transmission device according to claim 1, **characterised in that** a pressed part is provided as said multi-segment lens element (29, 29A, 29B) .

4. A transmission device according to claim 1, **characterised in that** an embossed part is provided as said multi-segment lens element (29, 29A, 29B).

5. A transmission device according to any one of claims 1 to 4, **characterised in that** the multi-segment lens element (29, 29A, 29B) is designed as an optic filter at least in regions thereof.

6. A transmission device according to claim 5, **characterised in that** the optic filter is formed by incorporating a dye in the multi-segment lens element (29, 29A, 29B).

7. A transmission device according to any one of claims 1 to 6, **characterised in that** the multi-segment lens element (29, 29A, 29B) consists of acrylic glass.

8. A transmission device according to any one of claims 1 to 6, **characterised in that** the multi-segment lens element (29, 29A, 29B) consists of polycarbonate.

9. A transmission device according to any one of claims 1 to 8, **characterised in that** the multi-segment lens element (29, 29A) is made in one piece.

10. A transmission device according to any one of claims 1 to 9, **characterised in that** the multi-segment lens element (29B) is assembled with a transparent carrier plate (29C).

11. A transmission device according to claim 10, **characterised in that** the transparent carrier plate (29C) consists of glass.

12. A transmission device according to any one of claims 1 to 11, **characterised in that** the multi-segment lens element (29, 29A, 29B), optionally in combination with the carrier plate (29C), forms a cover for the housing (20).

13. A transmission device according to any one of claims 1 to 12, **characterised in that** at least one lens segment (32, 33) is designed as a refractive region.

14. A transmission device according to any one of claims 1 to 13, **characterised in that** at least one lens segment (32, 33) is designed as a diffractive region.

15. A transmission device according to any one of claims 1 to 13, **characterised in that** at least one lens segment (32, 33) is designed as a Fresnel lens.

16. A transmission device according to any one of claims 1 to 15, **characterised in that** the multi-segment lens element (29, 29A, 29B) is designed with a central receiver element lens segment (33) and a plurality of transmitter element lens segments (32) located externally thereof.

17. A transmission device according to claim 16, **characterised in that** the transmitter element lens segments (32) are arranged according to a circle line around the central receiver element lens segment (33).

18. A transmission device according to claim 16 or 17, **characterised in that**, seen in top view, the receiver element lens segment (33) is larger than any individual transmitter element lens segment (32).

19. A transmission device according to any one of claims 1 to 18, **characterised in that** the IR transmitter and receiver elements (22, 23) are designed for an incoherent IR radiation.

20. A transmission device according to any one of claims 1 to 19, **characterised in that** the IR transmitter and receiver elements (22, 23) are integrated on a single circuit board (21).

21. A transmission device according to any one of claims 1 to 20, **characterised in that** the IR transmitter elements (22) are formed by IR-LED transmitter diodes with integral optics.

22. A transmission device according to any one of claims 1 to 21, **characterised in that** the IR receiver elements (23) are comprised of PIN-diodes.

## Revendications

1. Dispositif de transmission infrarouge (IR) comportant des éléments d'émission et de réception IR disposés dans un boîtier, **caractérisé en ce qu'**un élément de lentille commun (29,29A,29B) formé de plusieurs segments est disposé en avant des éléments IR (22,32), un segment particulier de lentille (32,33) de l'élément de lentille (29,29A,29B) étant associé à chaque élément IR (22,32).

2. Dispositif de transmission selon la revendication 1, **caractérisé en ce qu'**il est prévu comme élément de lentille (29,29A,29B) formé de plusieurs segments, une pièce moulée par injection.

3. Dispositif de transmission selon la revendication 1, **caractérisé en ce qu'**il est prévu comme élément de lentille (29,29A,29B) formé de plusieurs segments, une pièce pressée.

4. Dispositif de transmission selon la revendication 1, **caractérisé en ce qu'**il est prévu comme élément de lentille (29,29A,29B) formé de plusieurs segments, une pièce estampée.

5. Dispositif de transmission selon l'une des revendications 1 à 4, **caractérisé en ce que** l'élément de lentille (29,29A,29B) formé de plusieurs segments est agencé au moins en partie par endroits sous la forme d'un filtre optique.

6. Dispositif de transmission selon la revendication 5, **caractérisé en ce que** le filtre optique est formé par insertion d'un colorant dans l'élément de lentille (29,29A,29B) formé de plusieurs segments.

7. Dispositif de transmission selon l'une des revendications 1 à 6, **caractérisé en ce que** l'élément de lentille (29,29A,29B) formé de plusieurs segments est réalisé en verre acrylique.

8. Dispositif de transmission selon l'une des revendications 1 à 6, **caractérisé en ce que** l'élément de lentille (29,29A,29B) formé de plusieurs segments est constitué de polycarbonate.

9. Dispositif de transmission selon l'une des revendications 1 à 8, **caractérisé en ce que** l'élément de lentille (29,29A,29B) formé de plusieurs segments est réalisé d'un seul tenant.

10. Dispositif de transmission selon l'une des revendications 1 à 9, **caractérisé en ce que** l'élément de lentille (29B) formé de plusieurs segments est assemblé à une plaque de support transparente (29C).

11. Dispositif de transmission selon la revendication 10, **caractérisé en ce que** la plaque de support transparente (29C) est réalisée en verre.

12. Dispositif de transmission selon l'une des revendications 1 à 11, **caractérisé en ce que** l'élément de lentille (29,29A,29B) formé de plusieurs segments forme éventuellement conjointement avec la plaque de support (29C), un revêtement du boîtier (20).

13. Dispositif de transmission selon l'une des revendications 1 à 12, **caractérisé en ce qu'**au moins un segment de lentille (32,33) est agencé sous la forme d'une partie réfringente.

14. Dispositif de transmission selon l'une des revendications 1 à 13, **caractérisé en ce qu'**au moins un segment de lentille (32,33) est agencé sous la forme d'une région de diffraction.

15. Dispositif de transmission selon l'une des revendications 1 à 13, **caractérisé en ce qu'**au moins un segment de lentille (32,33) est agencé sous la forme d'une lentille de Fresne1.

16. Dispositif de transmission selon l'une des revendications 1 à 15, **caractérisé en ce que** l'élément de lentille (29,29A,29B) en forme de segment est agencé avec un segment de lentille central d'élément de réception (33) et avec un nombre de segments de lentille d'élément de détection (32) qui sont disposés à l'extérieur de cet élément.

17. Dispositif de transmission selon la revendication 16, **caractérisé en ce que** les segments de lentille d'éléments d'émission (32) sont disposés, d'une manière correspondant à une ligne circulaire, autour du segment de lentille central (33) de l'élément de réception.

18. Dispositif de transmission selon la revendication 16 ou 17, **caractérisé en ce que** le segment de lentille (33) et l'élément de réception sont plus grands, en vue en plan, que chaque élément de lentille individuel formant élément d'émission (32).

19. Dispositif de transmission selon l'une des revendications 1 à 18, **caractérisé en ce que** les éléments d'émission et de réception IR (22,23) sont réalisés pour un rayonnement IR non cohérent.

20. Dispositif de transmission selon l'une des revendications 1 à 19, **caractérisé en ce que** les éléments d'émission et de réception IR (22,23) sont intégrés sur une seule plaquette à circuits imprimés (21).

21. Dispositif de transmission selon l'une des revendications 1 à 20, **caractérisé en ce que** les éléments d'émission IR (22) sont formés par des diodes d'émission LED comportant un système optique intégré.

22. Dispositif de transmission selon l'une des revendications 1 à 21, **caractérisé en ce que** les éléments de réception IR (23) sont formés par des diodes PIN.
